(19) **Europäisches Patentamt**

**European Patent Office**

**Office européen des brevets**

(11) **EP 0 601 241 B1**

(12) **EUROPÄISCHE PATENTSCHRIFT**

(45) Veröffentlichungstag und Bekanntmachung des Hinweises auf die Patenterteilung:
**04.09.1996 Patentblatt 1996/36**

(51) Int Cl.$^6$: **H04N 1/46**

(21) Anmeldenummer: **92250350.3**

(22) Anmeldetag: **02.12.1992**

(54) **Verfahren zur Farbtransformation**

Colour transformation method

Procédé de transformation de couleurs

(84) Benannte Vertragsstaaten:
**DE**

(43) Veröffentlichungstag der Anmeldung:
**15.06.1994 Patentblatt 1994/24**

(73) Patentinhaber: **EASTMAN KODAK COMPANY**
**Rochester, New York 14650 (US)**

(72) Erfinder: **Petschik, Benno**
**W-8015 Markt Schwaben (DE)**

(74) Vertreter: **Pohle, Reinhard, Dipl.-Phys. et al**
**c/o KODAK AKTIENGESELLSCHAFT**
**Patentabteilung**
**Hedelfinger Str. 54-60**
**70327 Stuttgart (DE)**

(56) Entgegenhaltungen:
• **JOURNAL OF IMAGING SCIENCE AND TECHNOLOGY Bd. 36, Nr. 1, Januar/Februar 1992, Seiten 73 - 80 K. KANAMORI ET AL. 'Color Correction Technique for Hard Copies by 4-Neighbors Interpolation Method'**

**Beschreibung**

Die Erfindung betrifft ein Verfahren zur Farbwertetransformation von in einem mehrdimensionalen Farbraum eines Quellmediums gelegenen Farbwerten in Farbwerte eines mehrdimensionalen Farbraumes eines Zielmediums.

Unter "Quellmedium" sind hierbei Bildaufnahme- bzw. Bildabtasteinrichtungen zu verstehen, wie sie beispielsweise als Scanner, Bildaufnahmeröhre oder ähnliches bekannt sind. Als Zielmedium gelten im Rahmen dieser Erfindung Bildausgabegeräte. wie Farbdrucker, Farbplotter, Monitore und ähnliches.

Der Begriff der Farbwertetransformation umfaßt ebenso die Adaptierung eines der genannten Quellmedien an eine geräteunabhängige Farbbeschreibung, wie beispielsweise nach DIN 6174 (CIELAB), sowie von einer derartig genormten Darstellung an eines der genannten Zielmedien.

Prinzipiell sind zur Farbwertetransformation drei Arten des überganges von einem mehrdimensionalen Farbraum in einen anderen mehrdimensionalen Farbraum bekannt. Diese drei Arten unterscheiden sich bei gleichen Ausgangsparametern grundsätzlich in der Verarbeitungszeit und der Größe der zur Ablage von Zwischenwerten benötigten Speicherkapazität. Die Transformationsarten werden der Anschaulichkeit halber an einer Gerätekombination erläutert, die als Quellmedium einen Farbscanner und als Zielmedium einen Farbdrucker aufweist. Die Grundsätze der Transformationsarten sind jedoch auf alle anderen Quell- bzw. Zielmedien übertragbar.

Erstens ist es bekannt, eine Farbmusterkarte mit Hilfe des Farbdruckers zu erstellen, WO 92/03011, und diese Farbkarte mit einem Farbscanner abzutasten. Mit dem Farbdrucker werden die drei Farben Cyan, Magenta und Yellow mit jeweils n + 1 Stufen und in jeder Farbkombination, also insgesamt $(n + 1)^3$ bekannte Farbwerte aufgezeichnet. Anschließend wird diese Farbkarte mit einem Farbscanner abgetastet, wobei jedem der $(n + 1)^3$ Farbwerte ein Zahlentripel zugeordnet wird, das die Anteile der durch den Farbscanner unterscheidbaren Farben Rot, Grün, Blau, sogenannte RGB-Tripel, beinhaltet.

Jedem CMY-Tripel aus den Farben Cyan, Margenta und Yellow bestehend ist also ein RGB-Tripel zuordenbar. Aus den mindestens n + 1 Stufen einer jeden Farbe läßt sich gemäß WO 92/03611 ein Gleichungssystem n-ter Ordnung angeben, das eine Transformation der durch Abtastung gewonnenen RGB-Tripel in druckbare CMY-Tripel ermöglicht.

Der Vorteil der vergleichsweise geringen Anzahl von mindestens $(n + 1)^3$ zu speichernder Tripel wird durch einen sehr hohen Rechenaufwand überkompensiert, da für jedes CMY-Tripel das Gleichungssystem n-ter Ordnung gelöst werden muß. Hinsichtlich der Erläuterung der Problemstellung für die Farbtransformation ist die Veröffentlichung WO 92/03011 Bestandteil dieser Beschreibung.

Zweitens ist aus "Color Corrections Technique for Hard copies by 4-Neighbors Interpolation Methode", Journal of imagine science and technology, Volume 36, No. 1, January/February 1992, Page 73-80, bekannt, jedem RGB-Tripel einem CMY-Tripel zuzuordnen und diese Zuordnung tabellenförmig abzuspeichern. Bei einer Auflösung von 8 Bit je Farbe, das entspricht 256 Farbnuancen dieser Farbe, und Kombination aller sich ergebender Farbwerte der RGB-Tripel ist eine Speicherkapazität von 48 MByte vorzuhalten. Allerdings ist zur Farbtransformation eine Rechenzeit nicht mehr erforderlich, statt dessen nimmt die Suchzeit für das geforderte RGB-Tripel mit wachsender Speicherkapazität zu. Zur Bestimmung der Transformationstripel ist es außerdem erforderlich, für jede Drucker/Scanner-Kombination vorab jede der 16,7 Mio Farbkombinationen auszumessen.

Ausgehend von der Tatsache, daß die zwischen der zeitlich aufeinanderfolgenden Aufzeichnung benachbarter Druckpunkte verstreichende Zeitspanne aus physikalischen Gründen einen gerätespezifischen Grenzwert, der größer als Null ist, nicht unterschreiten kann, wurde drittens versucht, einen Kompromiß zwischen erforderlicher Rechenzeit und Speicherkapazität zu finden.

Aus der Veröffentlichung "Color Corrections Technique for Hard copies by 4-Neighbors Interpolation Methode" ist weiterhin bekannt, den durch die abtastbaren Farben Rot, Grün und Blau aufgespannten RGB-Farbraum in aneinandergereihte Teilräume zu zerlegen. Der Übersichtlichkeit halber wird der RGB-Farbraum in Form eines dreidimensionalen kartesischen Koordinatensystems dargestellt. Die Teilräume innerhalb des RGB-Farbraumes werden kubisch als Würfel angenommen. Jeder Würfel weist bekanntermaßen acht Eckpunkte auf. Zur eindeutigen Transformation von RGB-Tripeln auf CMY-Tripel genügen jedoch vier Punkte, einen Startwert und drei Offset-Werte, die den einzelnen Farben zugeordnet sind. Das bedeutet eine Überbestimmung des Farbraumes, die außerdem zu Fehlern an den Grenzflächen benachbarter Teilräume führen. Aus diesem Grund wird jeder Würfel in fünf Tetraeder zerlegt. Dabei weist ein zentrales Tetraeder 2/6 des Würfelvolumens auf und dessen Kanten sind durch die Flächendiagonalen der Würfelflächen gebildet. Die anderen vier Tetraeder weisen jeweils 1/6 des Würfelvolumens auf und beinhalten jeweils flächendiagonal gegenüberliegende Würfelecken. Aus Stetigkeitsgründen an den Grenzflächen benachbarter Würfel sind zwei Teilungstypen des Würfels in Tetraeder erforderlich.

Insgesamt sind also 10 verschiedene Tetraeder, die jeweils einem separaten Mikrofarbraum entsprechen, zu berücksichtigen.

Der Erfindung liegt die Aufgabe zugrunde, ein Verfahren zur Farbwertetransformation anzugeben, mit dem das Produkt aus Bereitstellungszeit und benötigter Speicherkapazität minimal wird.

Erfindungsgemäß wird diese Aufgabe durch die Kombination folgender Merkmale gelöst. Die Koordinaten eines dreidimensionalen Quellfarbraumes werden in jeweils $2^m$ Quellfarbwerte quantisiert. Aus $2^k$ Quellfarbwerten jeder Koordinate des quantisierten Quellfarbraumes, die $2^{(m-k)}$ Quellfarbwerte beabstandet sind, werden insgesamt $2^{3k}$ Quellfarbtripel gebildet. Für jedes der $2^{3k}$ Quellfarbtripel wird ein korrespondierendes Zielfarbtripel eines dreidimensionalen Zielfarbraumes ermittelt, dessen Koordinaten in einer ersten Tabelle abgespeichert werden. Jedem der $2^{3(m-k)}$ Quellfarbtripel werden ein Zeiger und vier Wichtungskoeffizienten zugeordnet, die in einer zweiten Tabelle abgespeichert werden. Die $2^{3(m-k)}$ Quellfarbtripel geben Koordinaten von Quellfarbwerten eines Teilfarbraumes an, deren Wichtungskoeffizienten zwischen beliebigen $2^{3k}$ Quellfarbtripeln identisch sind. Jeder zu transformierende Quellfarbwert wird einem von $2^{3m}$ Quellfarbtripeln zugeordnet, das aus drei jeweils einen höherwertigen und einen niederwertigen Teil aufweisenden Binärfolgen besteht. Aus den höherwertigen Teilen der Binärfolgen des zu transformierenden Quellfarbtripels wird eine erste Adresse gebildet. Aus den niederwertigen Teilen der Binärfolgen des zu transformierenden Quellfarbtripels wird eine zweite Adresse gebildet. Es werden mit der ersten Adresse aus der ersten Tabelle und mit der zweiten Adresse aus der zweiten Tabelle die Koordinaten von vier Zielfarbtripeln und vier Wichtungskoeffizienten ermittelt. Aus den Koordinaten der vier Zielfarbtripel und den vier Wichtungskoeffizienten wird durch Matrizenmultiplikation der zum zu transformierenden Quellfarbtripel korrespondierende Zielfarbtripel errechnet.

Weitere Ausgestaltungen der Erfindung gehen aus den abhängigen Patentansprüchen hervor. z.B. werden aus der ersten Tabelle mit der ersten Adresse die Koordinaten eines Zielfarbtripels gelesen und aus der zweiten Tabelle mit der zweiten Adresse über den Zeiger die Koordinaten von drei weiteren Zielfarbtripeln gelesen.

Außerdem werden in weiterer Ausgestaltung der Erfindung aus der ersten Tabelle mit der ersten Adresse die Koordinaten des ersten Zielfarbtripels und über einen konstanten Offset zur ersten Adresse die Koordinaten des zweiten Zielfarbtripels gelesen. Aus der zweiten Tabelle wird mit der zweiten Adresse über den Zeiger die Koordinaten des dritten und vierten Zielfarbtripels gelesen.

In einer zusätzlichen Ausgestaltung der Erfindung sind die Koordinaten der Zielfarbtripel durch den Zeiger direkt indexiert.

Die Erfindung wird nachstehend anhand von Zeichnungen näher beschrieben. Es zeigen:

Fig. 1    eine Darstellung der Aufteilung eines Quellfarbraumes in Teilräume,

Fig. 2    eine Darstellung zur vektoriellen Berechnung eines Farbwertes,

Fig. 3    eine Aufteilung eines Teilraumes in Tetraeder,

Fig. 4    eine Darstellung der Struktur der Binärfolgen,

Fig. 5    eine Darstellung zur Bildung der ersten und fünften Adresse,

Fig. 6    eine Darstellung zur Bildung der zweiten Adresse durch Addition,

Fig. 7    eine Darstellung zur Bildung der zweiten Adresse durch Inkrementierung,

Fig. 8    eine Darstellung des Inhaltes der zweiten Tabelle,

Fig. 9    eine Darstellung zur Bildung der dritten und vierten Adresse durch aufeinanderfolgende Addition,

Fig. 10    eine Darstellung zur Bildung der dritten und vierten Adresse durch aufeinanderfolgende Inkrementierung,

Fig. 11    eine Darstellung zur Bildung der vierten Adresse durch separate Addition,

Fig. 12    eine Darstellung zur Bildung der vierten Adresse durch separate Inkrementierung.

Ausgangspunkt der Erfindung ist ein dreidimensionaler, im folgenden karthesisch beschriebener Quellfarbraum. Dieser Quellfarbraum wird durch die Farbstrahlen X, Y und Z aufgespannt. Wird die Länge jedes Farbstrahles X, Y und Z auf den Wert 1 normiert, so ist jeder Farbwert in diesem Farbraum anhand seiner Koordinaten x, y und z, die Anteile an den Farbstrahlen X, Y und Z repräsentieren, exakt beschreibbar als Funktion F(x,y,z).

Durch vorzugsweise binäre Quantisierung jedes Farbstrahles X, Y und Z in $2^k + 1$ Farbwerte wird der Farbraum in $2^{3k}$ Teilräume zerlegt, die im karthesischen Farbraum durch ihre Eckpunkte beschrieben werden. Die Koordinaten x, y und z der Farbwerte geben dann die Anzahl der Quantisierungsstufen an, d.h. das Verhältnis zu $2^k$.

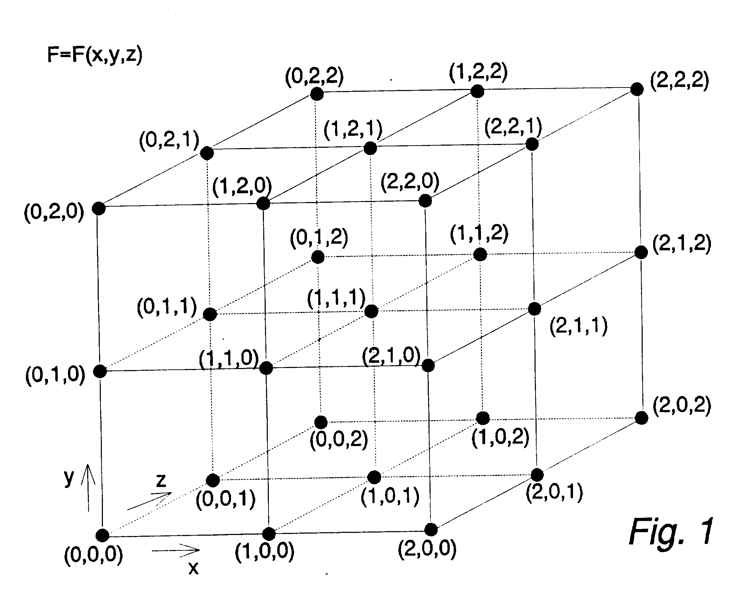

Für k = 1 ist beispielhaft in Fig. 1 ein würfelförmiger Farbraum dargestellt, der $2^{3k} = 8$ Teilräume zerlegt ist. Die den Farbwerten zugeordneten Koordinaten x, y und z sind Anteile von $2^k = 2$.

Werden die Koordinaten X = Rot, Y = Grün und Z = Blau gesetzt, dann ist der in Fig. 1 dargestellte Farbraum ein RGB-(Rot-Grün-Blau)Farbraum. Der mit (0,0,0) bezeichnete Farbwert enthält weder Rot-, noch Grün-, noch Blau-Anteile und wird im RGB-Farbraum als Schwarzpunkt bezeichnet. Der diametral gegenüber gelegene und mit (2,2,2) bezeichnete Farbwert weist maximal Rot-, Grün- und Blau-Anteile auf und wird als Weißpunkt bezeichnet. Die Raumdiagonale, die den Weißpunkt (2,2,2) mit dem Schwarzpunkt (0,0,0) verbindet, ist die sogenannte Unbuntlinie oder Helligkeitsskala. Je weiter der betrachtete Farbwert von der Unbuntlinie entfernt ist, umso höher ist seine Farbsättigung.

Der mit (2,0,0) bezeichnete Farbwert repräsentiert die Farbe Rot maximaler Sättigung, denn die Anteile von Grün und Blau sind y = z = 0; der mit (0,2,0) bezeichnete Farbwert repräsentiert die Farbe Grün mit maximaler Sättigung, denn die Anteile von Rot und Blau sind x = z = 0 und der mit (0,0,2) bezeichnete Farbwert repräsentiert die Farbe Blau mit maximaler Sättigung, denn die Anteile von Rot und Grün sind x = y = 0.

Jeder Farbwert in dem durch die Farbstrahlen X, Y und Z aufgespannten Farbraum läßt sich durch die Anteile an den normierten Farbstrahlen durch seine Koordinaten x, y und z beschreiben. Dazu genügen stets vier Referenzfarbwerte, das sind ein Startwert und drei Richtungswerte. Bezogen auf den gesamten Farbraum sind das in Fig. 1 als Startwert der mit (0,0,0) bezeichnete Schwarzpunkt und als Richtungswerte die drei Punke (2,0,0), (0,2,0) und (0,0,2), deren Richtung auf den Schwarzpunkt (0,0,0) bezogen ist.

In einem gemäß Fig. 1 in $2^{3k}$ Teilräume aufgeteilten Farbraum ist jeder zu beschreibende Farbwert einem der Teilräume zuordenbar, so daß die Lage der Eckpunkte des betreffenden Teilraumes, bezogen auf den Schwarzpunkt (0,0,0), zur Beschreibung der Koordinaten des zu bestimmenden Farbwertes verwendet werden. Jedoch weist jeder Teilraum nach Fig. 1 acht Eckpunkte auf, von denen jeweils nur vier zur exakten Beschreibung jedes Farbwertes genügen, d.h. daß jeder Teilraum im karthesischen Koordinatensystem, in dem die Begrenzungslinien der Teilräume zueinander parallel verlaufen und einander rechtwinklig schneiden, hinsichtlich seiner Beschreibung überbestimmt ist.

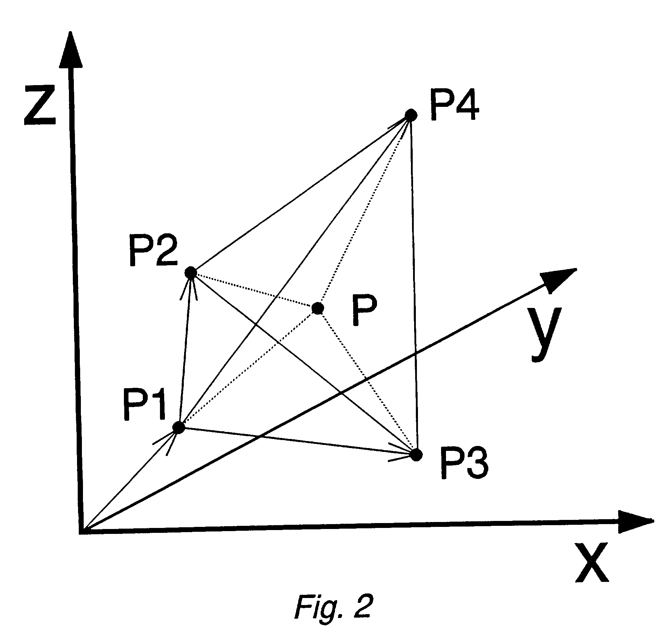

Bei nicht karthesisch beschreibbaren Farbräumen, wenn beispielsweise die Begrenzungslinien der Teilräume Kurvenscharen bilden, sind Farbwerte, die sich auf Grenzflächen benachbarter Teilräume befinden, nicht exakt beschreibbar. Deshalb wird jeder im karthesischen Koordinatensystem würfelförmige Teilraum in Tetraeder zerlegt. Nach den Prinzipien der Vektorrechnung ist gemäß Fig. 2 jeder Punkt P innerhalb eines durch die Eckpunkte P1 bis P4 definierten Tetraeders unabhängig von der Form des Tetraeders beschreibbar. Jeder Eckpunkt P1 bis P4 ist durch ein Zahlentripel, das die Koordinaten x, y und z als Anteile der normierten Strahlen X, Y und Z angibt, bezogen auf den Koordinatenursprung, definiert. Die Koordinaten x, y und z des Punktes P werden aus den Koordinaten x, y und z der Eckpunkte P1 bis P4 berechnet. Die Kanten des Tetraeders sind als Vektoren (P2-P1), (P3-P1) und (P4-P1) beschreibbar. Die Koordinaten x, y und z des Punktes P werden als Linearkombination der Vektoren (P2-P1), (P3-P1) und (P4-P1) dargestellt.

Für Pi = Pi (xi,yi,zi) und i = 1....4 sowie P = P (x,y,z) gilt:

$$P = P1 + k2*(P2-P1) + k3*(P3-P1) + k4*(P4-P1) \tag{1}$$

Durch Auflösung der Klammern und Umformung der Gleichung (1) erhält man:

$$P = k1* P1 + k2* P2 + k3* P3 + k4* P4 \tag{2}$$

für k1 = 1 - k2 - k3 - k4

Die Gleichung (3) bedeutet, daß sich die Koordinaten x, y, z des Punktes P aus den Summen der mit den Wichtungskoeffizienten k1 bis k4 multiplizierten Koordinaten x1... x4, y1... y4 und z1... z4 zusammensetzen.

Die Berechnung der Koordinaten x, y und z jedes Punktes P innerhalb des Tetraeders mit den Eckpunkten P1 bis P4 erfolgt nach folgender Gleichung für die Matrizenmultiplikation:

$$\begin{pmatrix} x \\ y \\ z \end{pmatrix} = \begin{pmatrix} x1 & x2 & x3 & x4 \\ y1 & y2 & y3 & y4 \\ z1 & z2 & z3 & z4 \end{pmatrix} * \begin{pmatrix} k1 \\ k2 \\ k3 \\ k4 \end{pmatrix} \tag{3}$$

Vorteilhafterweise erfolgt die Transformation der Farbwerte in quantisierter Form. Dazu wird jeder Farbstrahl X, Y und Z in $2^m$ Quantisierungseinheiten zerlegt. Wie bereits in Zusammenhang mit Fig. 1 dargestellt, werden $2^k$ Farbwerte pro Farbstrahl X, Y und Z zur Definition der Eckpunkte der Teilräume herangezogen, die auf dem jeweiligen Farbstrahl X, Y und Z Jeweils $2^{(m-k)}$ Quantisierungsstufen voneinander entfernt sind.

Das heißt, jeder Farbwert im Farbraum ist durch ein Tripel ganzzahliger Vielfache einer Quantisierungseinheit von $2^{-m}$ darstellbar. Damit ist jeder Eckpunkt P1 bis P4 jedes Tetraeders durch Tripel ganzzahliger Vielfache einer Quantisierungseinheit beschreibbar. Daraus folgt, daß auch die Wichtungskoeffizienten k1 bis k4 nur diskrete Werte annehmen können, die ganzzahlige Vielfache einer Quantisierungseinheit sind. Vorteilhafterweise sind also nur ganzzahlige Werte für die Transformationsvorschrift zu verrechnen. Dadurch wird eine erhebliche Verkürzung der erforderlichen Rechenzeit erzielt.

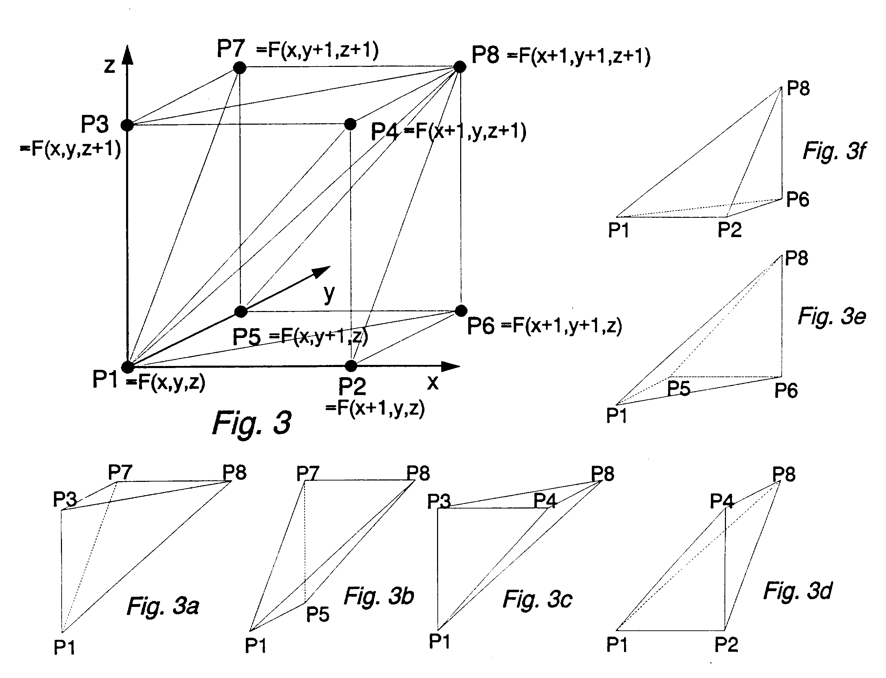

Gemäß Fig. 3 wird jeder im karthesischen Raum würfelförmige Teilraum, der acht Eckpunkte P1 bis P8 aufweist, in sechs Tetraeder eingeteilt.

Die Eckpunkte P1 bis P8 des würfelförmigen Teilraumes sind als Zahlentripel in Abhängigkeit von $2^{(m-k)}$ Quantisierungsstufen umfassenden Schritten angegeben. Dabei ist der Eckpunkt $P1 = F(x,y,z)$ der dem Koordinatenursprung am nächsten gelegene Eckpunkt des würfelförmigen Teilraumes. Der Eckpunkt P2 ist bei unveränderten y- und z-Koordinaten auf der X-Achse um einen Schritt positiv verschoben, $P2 = F(x+1,y,z)$. Analog dazu ist der Eckpunkt P3 bei unveränderten x-von y-Koordinaten auf der Z-Achse um einen Schritt positiv verschoben, $P3 = F(x,y,z+1)$ und der Eckpunkt P4 bei unveränderten x- und z-Koordinaten auf der Y-Achse um einen Schritt positiv verschoben, $P5 = F(x,y+1,z)$.

Der dem Eckpunkt P1 diametral gegenübergelegene Eckpunkt P8 ist in X-, Y- und Z-Richtung um jeweils einen Schritt gegenüber dem Eckpunkt P1 verschoben und hat die Koordinaten $P8 = F(x+1,y+1,z+1)$.

Die sechs Tetraeder sind so auf den würfelförmigen Teilraum verteilt, daß die Eckpunkte P1 und P8 des würfelförmigen Teilraumes gemeinsame Eckpunkte der sechs Tetraeder sind und daß die Koordinaten der restlichen zwei Eckpunktpaare (P3, P7), (P5, P7), (P3, P4), (P2, P4), (P5, P6) und (P2, P6) sich in genau einer Koordinate um genau einen Schritt unterscheiden.

Darüber hinaus sind die Grenzflächen benachbarter Tetraeder benachbarter würfenförmiger Teilräume deckungsgleich, so daß unabhängig davon, welches Tetraeder welchen Teilraumes zur Transformation eines auf einer Grenzfläche liegenden Quellfarbwertes herangezogen wird, stets eine eindeutige Zuordnung des Quellfarbwertes zum korrespondierenden Zielfarbwert gewährleistet ist.

Beispielsweise ist die Grenzfläche, die in Fig. 3 durch die Eckpunkte zugeordnet ist, gleich der Grenzfläche des benachbarten würfelförmigen Teilraumes, der in X-Richtung um einen Schritt verschoben ist, der durch die Eckpunkte P2*, P5* und P7* aufgespannt wird, denn

$$P2 = P1^* = F(x+1,y,z)$$

$$P6 = P5^* = F(x+1,y+1,z)$$

$$P8 = P7^* = F(x+1,y+1,z+1)$$

weil

$$P1^* = P1(x=x+1) = F(x+1,y,z)$$

$$P5^* = P5(x=x+1) = F(x+1,y+1,z)$$

$$P7^* = P7(x=x+1) = F(x+1,y+1,z+1).$$

Im folgenden wird das Verfahren zur Farbwertetransformation anhand eines Ausführungsbeispieles näher erläutert. Der Quellfarbraum ist dabei ein RGB-Farbraum, durch den beispielsweise die Farbwerte, die Ergebnis der Abtastung einer Vorlage durch einen Farbscanner sind, beschrieben werden. Der Zielfarbraum ist ein CMY-Farbraum (Cyan-Magenta-Yellow), durch den beispielsweise die Farbwerte, die mit einem Farbdrucker aufzeichenbar sind, beschrieben werden.

Im weiteren wird der Farbstrahl Y als Rotkomponente R, der Farbstrahl Y als Grünkomponente G und der Farbstrahl Z als Blaukomponente B bezeichnet.

Jeder Farbwert innerhalb des RGB-Farbraumes ist durch seinen Rot-, Grün- und Blauanteil beschreibbar. Der RGB-Farbraum wird in $2^{3m}$ diskrete Farbwerte quantisiert, wobei jede Farbkomponente R, G und B jeweils in $2^m$ Quantisierungseinheiten eingeteilt wird. Jeder Quellfarbwert, der von der Vorlage abgetastet wird, wird einen der $2^{3m}$ diskreten Farbwerte zugeordnet.

Für $2^{3k}$ Quellfarbwerte, die in jeder Farbkomponente R, G und B jeweils $2^{(m-k)}$ Quantisierungseinheiten beabstandet sind, werden die Zielfarbwerte, die durch ihren Cyan-, Magenta- und Yellow-Anteil gekennzeichnet sind, ermittelt und in einer ersten Tabelle abgespeichert.

Jeder Quellfarbwert wird quantisiert als RGB-Farbtripel dargestellt, wobei das Tripel aus drei Binärfolgen besteht, die jeweils m Bit lang sind. Damit sind pro Farbkomponente $2^m$ Quantisierungsstufen darstellbar und im RGB-Farbraum $2^{3m}$ Farbwerte differenzierbar.

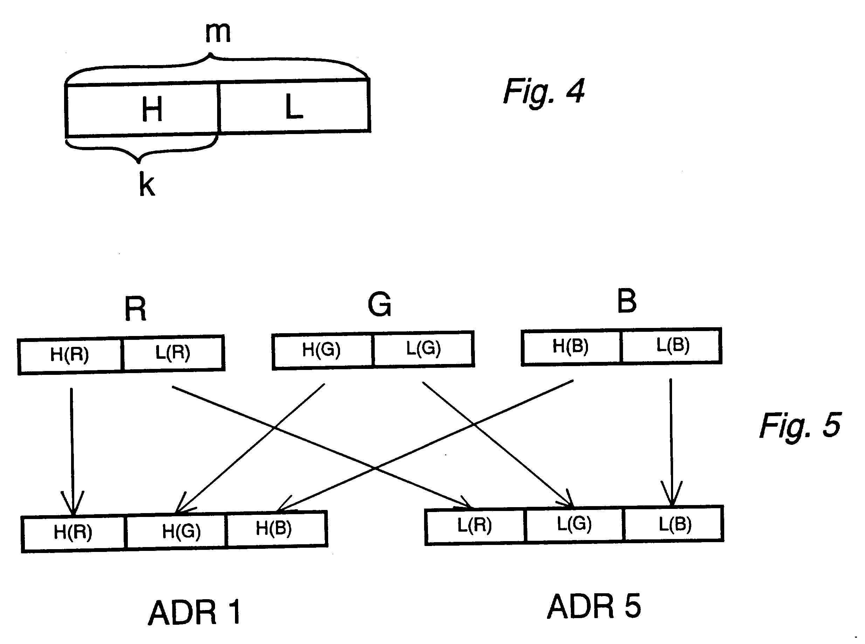

Jede m Bit lange Binärfolge wird gemäß Fig. 4 in einen höherwertigen Teil mit einer Länge von k Bit im weiteren als H (High)-Teil bezeichnet und einen niederwertigen Teil mit einer Länge von (m-k) Bit, im weiteren als L (Low)-Teil bezeichnet, eingeteilt.

Für Quellfarbwerte, deren L-Teile der Farbtripel für alle Farbkomponenten $L(R) = L(G) = L(B) = 0$ sind, sind die bereits aufgeführten Farbkomponenten im Zielfarbraum bekannt.

Jeder zu transformierende Quellfarbwert wird einem von $2^{3m}$ Quellfarbtripeln zugeordnet. Jedes Quellfarbtripel besteht aus drei Binärfolgen von m Bit Länge. Die H-Anteile $H(R)$, $H(G)$ und $H(B)$, die jeweils k Bit lang sind, werden gemäß Fig. 5 zu einer ersten Adresse ADR1 von 3k Bit Länge zusammengefaßt. Unter dieser ersten Adresse ADR1 sind in der ersten Tabelle die CMY-Komponenten C1, M1 und Y1 als Zielfarbtripel eines ersten Zielfarbwertes gespeichert, der im folgenden als Startwert bezeichnet wird. Dieser Startwert entspricht dem Punkt P1 in Fig. 2.

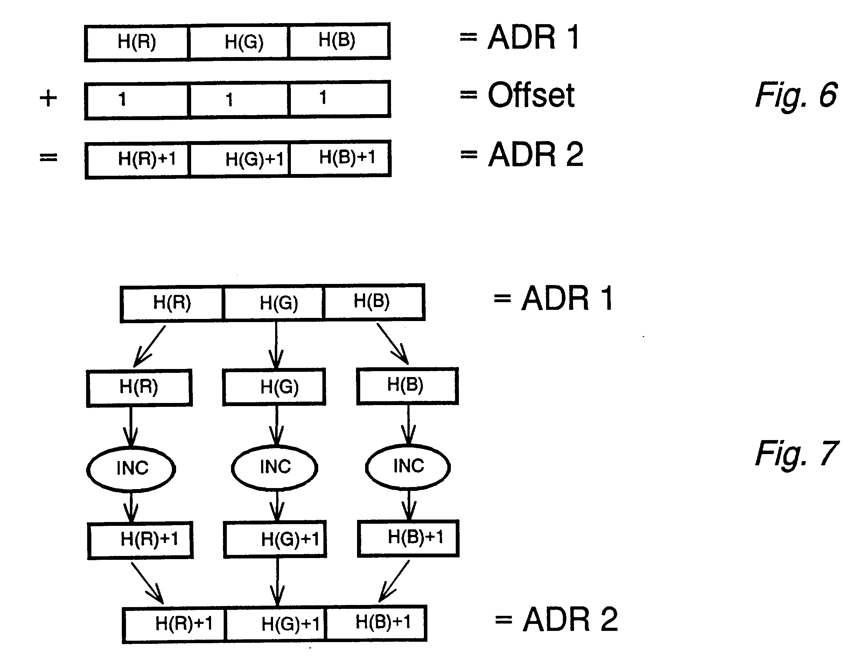

In einem weitere Schritt wird die erste Adresse ADR1 um einen festen Offset erhöht. In einer ersten Variante wird dazu eine 3k Bit lange Binärfolge einmalig als Konstante definiert und gemäß Fig. 6 jeweils zu der ersten Adresse ADR1 addiert. Das Ergebnis ist eine zweite Adresse ADR2.

Mit einer zweiten Variante werden die H-Anteile $H(R)$, $H(G)$ und $H(B)$ separat imkrementiert. Anschließend werden die inkrementierten H-Anteile $H(R)+1$, $H(G)+1$ und $H(B)+1$ zu einer 3k Bit langen Binärfolge zusammengefaßt, die eine zweite Adresse ADR2 bildet, Fig. 7 .

Unter dieser zweiten Adresse ADR2 sind in der ersten Tabelle die CMY-Komponenten C2, M2 und Y2 als Zielfarbtripel eines zweiten Zielfarbwertes gespeichert, der im folgenden als erster Richtungswert bezeichnet wird. Dieser erste Richtungswert entspricht dem Punkt P4 in Fig. 2 und dem Punkt P8 in Fig. 3.

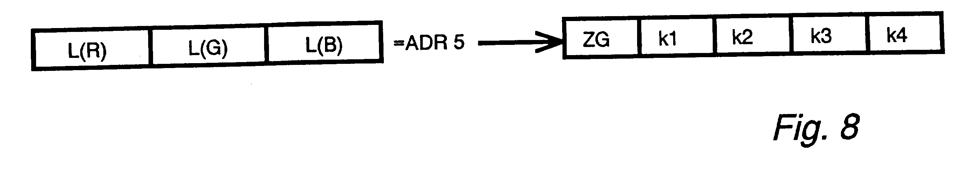

Die L-Anteile $L(R)$, $L(G)$ und $L(B)$, die jeweils m-k Bit lang sind, werden gemäß Fig. 5 zu einer 3(m-k) Bit langen fünften Adresse ADR5 zusammengefaßt. Unter dieser fünften Adresse ADR5 sind in einer zweiten Tabelle ein Zeiger ZG und vier Wichtungskoeffizienten k1 bis k4 gespeichert. Der Zeiger ZG hat eine Länge von $2*3 = 6$ Bit, Fig. 8 .

Die ersten drei Bit des Zeigers ZG werden zur Berechnung einer dritten Adresse ADR3 herangezogen. In Analogie zur Berechnung der zweiten Adresse ADR2 kann dies durch Addition oder Inkrementierung dargestellt werden.

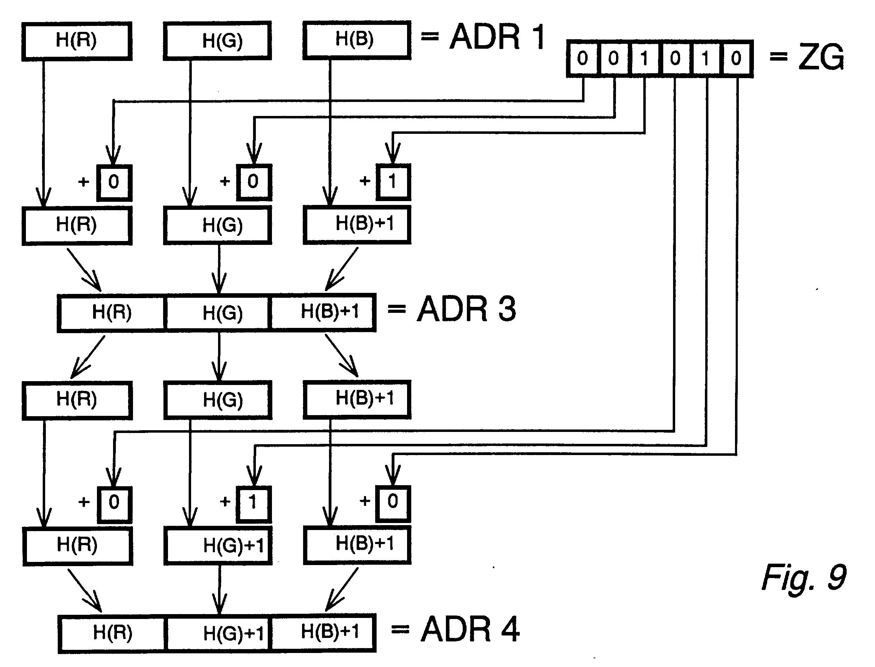

Gemäß Fig. 9 wird in einer ersten Variante das erste Bit des Zeigers ZG zum H-Anteil der Farbe Rot $H(R)$ addiert, das zweite Bit des Zeigers ZG zum H-Anteil der Farbe Grün $H(G)$ addiert und das dritte Bit des Zeigers ZG zum H-Anteil der Farbe Blau $H(B)$ addiert. Anschließend werden die Summen zu der 3k Bit Langen dritten Adresse ADR3 zusammengefaßt.

Unter der dritten Adresse ADR3 sind in der ersten Tabelle die CMY-Komponenten C3, M3 und Y3 als Zahlentripel eines dritten Zielfarbwertes gespeichert, der im folgenden als zweiter Richtungswert bezeichnet wird. Dieser zweite Richtungswert entspricht dem Punkt P2 in Fig. 2 und einem der Punkte P2 bis P2 in Fig. 3. Bei der in Fig. 9 beispielsweise angegebenen Bitfolge für die ersten drei Bit des Zeigers ZG von 0,0,1 entspricht der zweite Richtungswert dem Punkt P3 in Fig. 3.

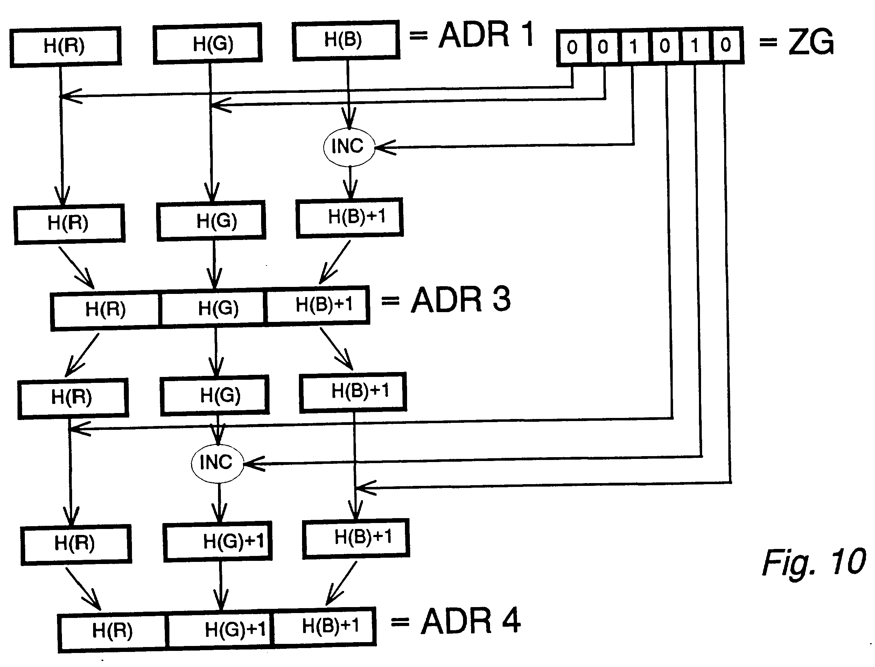

Gemäß Fig. 10 wird in einer zweiten Variante der Inhalt des Zeigers ZG bitweise überprüft. Jedes Bit des Zeigers ZG ist einem H-Anteil $H(R)$, $H(G)$ und $H(B)$ fest zugeordnet. Ist das betreffende Bit auf 0 gesetzt, bleibt der entsprechende H-Anteil unverändert. Ist das betreffende Bit auf 1 gesetzt, wird der entsprechende H-Anteil imkrementiert. Für die in Fig. 10 dargestellten Zeigerbit bedeutet das, daß wegen der ersten beiden Nullen im Zeiger ZG die H-Anteile für Rot $H(R)$ und Grün $H(G)$ unverändert bleiben. Das dritte Zeigerbit hat den Wert von 1. Der entsprechende H-Anteil für Blau $H(B)$ wird imkrementiert. Die sich daraus ergebenden H-Anteile der Farben Rot $H(R)$, Grün $H(G)$ und Blau $H(B)+1$ werden zu der 3k Bit langen Adresse ADR3 zusammengefaßt.

Die zweiten 3 Bit des Zeigers ZG werden zur Berechnung einer vierten Adresse ADR4 herangezogen. In Analogie zur dritten Adresse ADR3 kann dies durch Addition der einzelnen Zeigerbit zu den H-Anteilen gemäß Fig. 9 oder zur zeigerbitabhängige Inkrementierung der H-Anteile gemäß Fig. 10 dargestellt werden.

Dabei ist in einer ersten Variante vorgesehen, gemäß Fig. 9 die Zeigerbit einzeln zu den H-Anteilen $H(R)$, $H(G)$ und $H(B)+1$ der dritten Adresse ADR3 zu addieren.

In einer zweiten Variante ist vorgesehen, gemäß Fig. 10 die H-Anteile $H(R)$, $H(G)$ und $H(B)+1$ der dritten Adresse ADR3 zeigerbitabhängig zu inkrementieren.

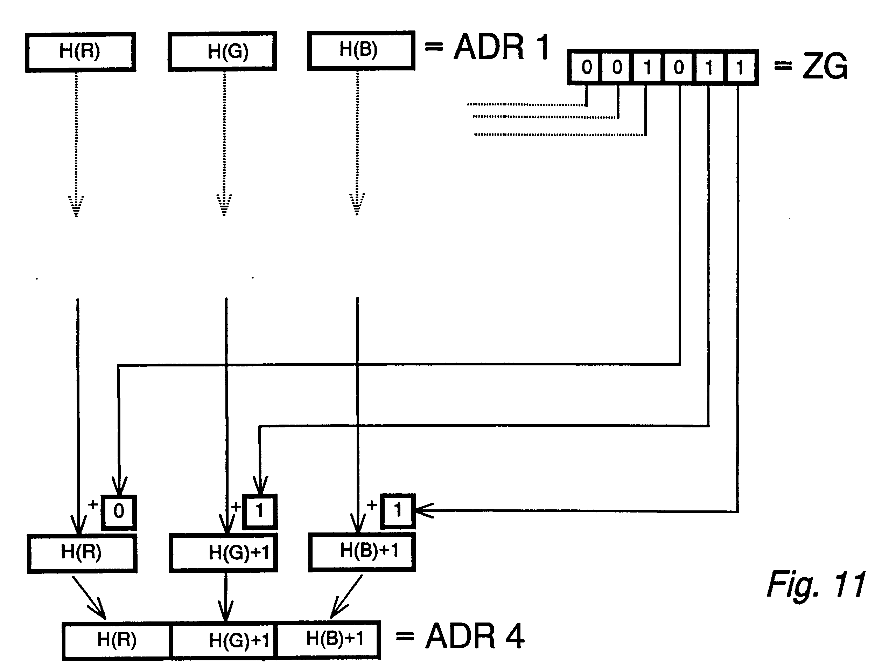

In einer dritten Variante werden gemäß Fig. 11 die H-Anteile $H(R)$, $H(G)$ und $H(B)$ der ersten Adresse ADR1, die den Startwert repräsentiert, zu den zugeordneten Zeigerbit addiert.

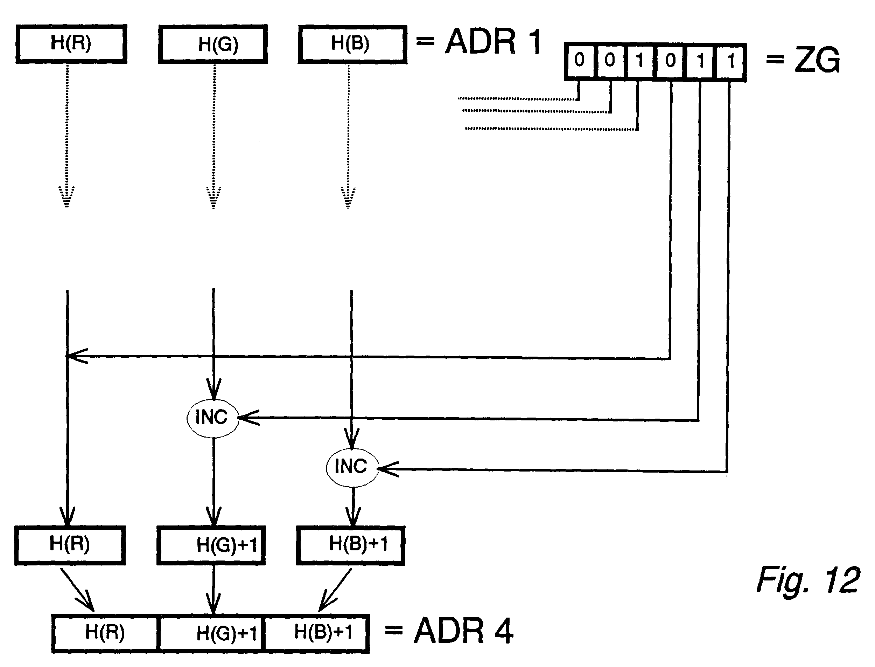

In einer vierten Variante zur Berechnung der vierten Adresse ADR4 werden die H-Anteile $H(R)$, $H(G)$ und $H(B)$ der ersten Adresse ADR1, die den Startwert repräsentiert, zeigerbitabhängig gemäß Fig. 12 inkrementiert.

Die dritte und vierte Variante unterscheiden sich von der ersten und zweiten Variante in der Belegung der Zeigerbit, die in folgender Tabelle für die Tetraeder gemäß Fig. 3a bis 3f dargestellt sind.

| Zeiger für 1. und 2. Variante | Zeiger für 3. und 4. Variante | Figur |
|---|---|---|
| 001010 | 001011 | 3a |
| 010001 | 010011 | 3b |

(fortgesetzt)

| Zeiger für 1. und 2. Variante | Zeiger für 3. und 4. Variante | Figur |
|:---:|:---:|:---:|
| 001100 | 001101 | 3c |
| 100001 | 100101 | 3d |
| 010100 | 010110 | 3e |
| 100010 | 100110 | 3f |

Unter der vierten Adresse ADR4 sind in der ersten Tabelle die CMY-Komponenten C4, M4 und Y4 als Zahlentripel eines vierten Zielfarbwertes abgespeichert, der im folgenden als dritter Richtungswert bezeichnet wird. Dieser dritte Richtungswert entspricht dem Punkt P3 in Fig. 2 und einem der Punkte P2 bis P7 in Fig. 3, der dem zweiten Richtungswert benachbart ist.

Bei der in den Fig. 9 und 10 beispielsweise angegebenen Bitfolge für die zweiten 3 Bit des Zeigers ZG von 0,1,0 und gleichermaßen bei der in den Fig. 11 und 12 angegebenen Bitfolge von 0,1,1 entspricht der dritte Richtungswert Punkt P7 in Fig. 3.

Die CMY-Komponenten C1 bis C4, M1 bis M4, Y1 bis Y4 des Startwertes und der drei Richtungswerte sowie die aus der zweiten Tabelle gelesenen Wichtungskoeffizienten k1 bis k4 werden in die Gleichung 3 eingesetzt, die dann folgende Gestalt aufweist:

$$
\begin{pmatrix} C \\ M \\ Y \end{pmatrix} = \begin{pmatrix} C1 & C2 & C3 & C4 \\ M1 & M2 & M3 & M4 \\ Y1 & Y2 & Y3 & Y4 \end{pmatrix} * \begin{pmatrix} k1 \\ k2 \\ k3 \\ k4 \end{pmatrix} \tag{3}
$$

Das Ergebnis der Matrizenmultiplikation ist ein CMY-Tripel, das den Cyan-, Magenta- und Yellow-Anteil des gesuchten Zielfarbwertes im CMY-Zielfarbraum enthält.

Alle in der Matrizengleichung enthaltenen Faktoren sind ganzzahlige Vielfache einer Quantisierungseinheit. Das bedeutet, die erforderlichen Rechenprozeduren auf einer BOOLEschen Logikanordnung sind auf Schiebe- und Addieroperationen mit Integervariablen beschränkt, die bereits vom Befehlssatz jedes Universalprozessors umfaßt sind, ohne Verluste an Rechengenauigkeit und damit an Farbtransformationstreue hinnehmen zu müssen.

Mit einem versuchsweise in der Hochsprache C geschriebenen Programm zur Transformation von gescannten Bilddateien im RGB-Farbraum in druckfähige Bilddateien im CMY-Farbraum wurde auf einem PC (486-33) für m = 8 und k = 4 eine Verarbeitungsgeschwindigkeit von 23.400 Pixeln pro Sekunde erzielt. Durch Programmierung von Prozeduren in Maschinensprache läßt sich die Verarbeitungsgeschwindigkeit erhöhen. Für Echtzeitanwendungen im Videobereich ist die Implementierung in einem ASIC vorteilhaft.

Der erforderliche Speicherbedarf läßt sich für die erste und die zweite Tabelle separat berechnen. Für $2^k$ Quantisierungsstufen sind auf jedem Farbstrahl R, G und B $2^k+1$ Farbwerte zu definieren, deren korrespondierende drei Farbkomponenten C, M und Y im Zielfarbraum bestimmt werden. Für jede Farbkomponente C, M und Y werden 2 Byte vorgehalten. Der gesamte Speicherbedarf für die erste Tabelle ST1 ist demgemäß nach folgender Gleichung berechenbar:

$$
ST1 = (2^k+1)^3 * 3 * 2 \text{ Byte} \tag{4}
$$

In der zweiten Tabelle sind der Zeiger ZG und vier Wichtungskoeffizienten k1 bis k4 zu speichern. Der Zeiger hat eine Länge von 6 Bit. Für jede Wichtungskomponente ist eine Länge von (m-k+1) Bit vorgesehen. In jedem Teilraum sind $2^{3(m-k)}$ Wichtungskombinationen möglich. Der Gesamtspeicherbedarf für die zweite Tabelle ST2 ist demgemäß nach folgender Gleichung berechenbar:

$$
ST2 = \left[ 4(m-k+1) + ZG \right] * 2^{3(m-k)} \tag{5}
$$

Der Gesamtdatenspeicherbedarf SD ist die Summe aus dem Speicherbedarf für die erste Tabelle ST1 und den Speicherbedarf für die zweite Speichertabelle ST2,

$$SD = ST1 + ST2 \tag{6}$$

Mit den Gleichungen (4) und (5) läßt sich über Grenzwertbetrachtungen für Gleichung (6) ein m/k-Verhältnis angeben, bei der Gesamtdatenspeicherbedarf SD minimal wird.

m/k = 2.

Das bedeutet für m = 8 Bit ist k = 4 Bit und jeder Farbstrahl R, G und B in 256 Quantisierungseinheiten eingeteilt. Der Gesamtdatenspeicherbedarf beträgt dann 42.790 Byte.

In weiterer Ausgestaltung kann die Länge des Zeigers ZG auf 3 Bit reduziert werden. Von den daraus resultierenden $2^3 = 8$ Kombinationen werden 6 Bit-Kombinationen zur Adressierung der sechs Tetraeder benutzt. Der erforderliche Gesamtdatenspeicherbedarf SD läßt sich so zu Lasten der Rechenzeit auf 41.254 Byte reduzieren, die zur Decodierung des Zeigers ZG erforderlich wird.

## Patentansprüche

1. Verfahren zur Farbwertetransformation,
   gekennzeichnet durch die Kombination folgender Merkmale:

   a) die Koordinaten eines dreidimensionalen Quellfarbraumes werden in jeweils $2^m$ Quantisierungseinheiten eingeteilt,

   b) aus 2k+1 Quellfarbwerten jeder Koordinate des quantisierten Quellfarbraumes, die $2^{(m-k)}$ Quellfarbwerte beabstandet sind, werden $2^{3k}$ Quellfarbtripel gebildet (wobei m und k natürliche Zahlen sind und m größer als k ist),

   c) für jedes der $2^{3k}$ Quellfarbtripel wird ein korrespondierendes Zielfarbtripel eines dreidimensionalen Zielfarbraumes ermittelt, dessen Koordinaten in einer ersten Tabelle abgespeichert werden,

   d) jedem der jeweils zwischen den $2^{3k}$ Quellfarbtripeln gelegenen $2^{3(m-k)}$ Quellfarbtripel werden ein Zeiger (ZG) und vier Wichtungskoeffizienten (k1 bis k4) zugeordnet, die in einer zweiten Tabelle abgespeichert werden,

   e) jeder zu transformierende Quellfarbwert wird einem von $2^{3m}$ Quellfarbtripel zugeordnet, das aus drei jeweils einen höherwertigen und einen niederwertigen Teil aufweisenden Binärfolgen besteht,

   f) aus den höherwertigen Teilen der Binärfolgen des zu transformierenden Quellfarbtripels wird eine erste Adresse (ADR1) gebildet,

   g) aus der ersten Adresse (ADR1) werden jeweils durch Addition einer teilraumspezifischen Konstanten eine zweite Adresse (ADR2), eine dritte Adresse (ADR3) und eine vierte Adresse (ADR4) berechnet,

   h) aus den niederwertigen Teilen der Binärfolgen des zu transformierenden Quellfarbtripels wird eine fünfte Adresse (ADR5) gebildet,

   i) es werden mit der ersten Adresse (ADR1) aus der ersten Tabelle und mit der fünften Adresse (ADR5) aus der zweiten Tabelle die Koordinaten von vier Zielfarbtripeln (x1 bis x4, y1 bis y4, z1 bis z4) und vier Wichtungskoeffizienten (k1 bis k4) ermittelt,

   k) aus den Koordinaten der vier Zielfarbtripel (x1 bis x4, y1 bis y4, z1 bis z4) und den vier Wichtungskoeffizienten (k1 bis k4) wird durch Matrizenmultiplikation der zum zu transformierenden Quellfarbtripel korrespondierende Zielfarbtripel (x, y, z) errechnet.

2. Verfahren nach Anspruch 1,
   dadurch gekennzeichnet,
   daß mit der ersten Adresse (ADR1) aus der ersten Tabelle die Koordinaten eines ersten Zielfarbtripels (x1, y1, z1) gelesen werden und daß mit der fünften Adresse (ADR5) aus der zweiten Tabelle der Zeiger (ZG) gelesen wird, der 2 Bit-Gruppen aufweist.

3. Verfahren nach den Ansprüchen 1 und 2,
   dadurch gekennzeichnet,
   daß zur Berechnung der zweiten Adresse (ADR2) die Bits der ersten Bit-Gruppe des Zeigers (ZG) zu den Binärfolgen der ersten Adresse (ADR1) addiert werden.

4. Verfahren nach Anspruch 3,
   dadurch gekennzeichnet,
   daß zur Berechnung der dritten Adresse (ADR3) die Bits der zweiten Bit-Gruppe des Zeigers (ZG) zu den Binärfolgen der ersten Adresse (ADR1) addiert werden.

5. Verfahren nach Anspruch 3,
   dadurch gekennzeichnet,
   daß zur Berechnung der dritten Adresse (ADR3) die Bits der zweiten Bit-Gruppe des Zeigers (ZG) zu den Binärfolgen der zweiten Adresse (ADR2) addiert werden.

6. Verfahren nach den Ansprüchen 1 und 2,
   dadurch gekennzeichnet,
   daß zur Berechnung der zweiten Adresse (ADR2) die Binärfolgen der ersten Adresse (ADR1) in Abhängigkeit von den Bits der ersten Bit-Gruppe des Zeigers (ZG) inkrementiert werden.

7. Verfahren nach Anspruch 6,
   dadurch gekennzeichnet,
   daß zur Berechnung der dritten Adresse (ADR3) die Binärfolgen der zweiten Adresse (ADR2) in Abhängigkeit von den Bits der zweiten Bit-Gruppe des Zeigers (ZG) inkrementiert werden.

8. Verfahren nach Anspruch 6,
   dadurch gekennzeichnet,
   daß zur Berechnung der dritten Adresse (ADR3) die Binärfolgen der ersten Adresse (ADR1) in Abhängigkeit von den Bits der zweiten Bit-Gruppe des Zeigers (ZG) inkrementiert werden.

9. Verfahren nach einem der Ansprüche 1 bis 8,
   dadurch gekennzeichnet,
   daß zur Berechnung der vierten Adresse (ADR4) jede Binärfolge der ersten Adresse (ADR1) inkrementiert wird.

10. Verfahren nach einem der Ansprüche 1 bis 8,
    dadurch gekennzeichnet,
    daß zur Berechnung der vierten Adresse (ADR4) die erste Adresse (ADR1) durch Addition um einen farbwertunabhängigen, konstanten Offset erhöht wird.

**Claims**

1. Method for color value transformation, <u>characterized by</u> the combination of the following features:

   a) the coordinates of a three-dimensional source color area are each divided into $2^m$ quanticization units.

   b) $2^{3k}$ source color triples are formed from 2k+1 source color values of each coordinate of the quanticized source color area with a spacing of $2^{(m-k)}$ source color values (where m and k are natural numbers and m is greater than k),

   c) for each of said $2^{3k}$ source color triples a corresponding target color triple of a three-dimensional target color area is determined, the coordinates of which are stored in a first table,

   d) each of the $2^{3(m-k)}$ source color triples situated between the $2^{3k}$ source color triples is assigned a pointer (ZG) and four weighting coefficients (k1 to k4) that are stored in a second table,

   e) each source color value to be transformed is assigned one of $2^{3m}$ source color triples comprising binary sequences each having a higher-value and a lower-value part,

f) a first address (ADR1) is formed from the higher value parts of the binary sequences of the source color triple to be transformed,

g) a second address (ADR2), a third address (A DR3) and a fourth address (ADR4) are calculated from said first address (ADR1) by addition of a partial-area specific constant in each case,

h) a fifth address (ADR5) is formed from the lower-value parts of the binary sequences of the source color triple to be transformed,

i) the coordinates of four target color triples (x1 to x4, y1 to y4, z1 to z4) and four weighting coefficients (k1 to k4) are determined using the first address (ADR1) from said first table and the fifth address (ADR5) from said second table,

k) the target color triple (x, y, z) corresponding to the source color triple to be transformed is calculated by matrix multiplication from the coordinates of said four target color triples (x1 to x4, y1 to y4, z1 to z4).

2. Method according to Claim 1, characterized in that the coordinates of a first target color triple (x 1, y1, z1) are read using said first address (ADR1) from said first table, and in that said pointer (ZG) having 2 bit groups is read using said fifth address (ADR5) from said second table.

3. Method according to Claims 1 and 2, characterized in that for calculation of said second address (ADR2) the bits of the first bit group of said pointer (ZG) are added to the binary sequences of said first address (ADR1).

4. Method according to Claim 3, characterized in that for calculation of said third address (ADR3) the bits of the second bit group of said pointer (ZG) are added to the binary sequences of said first address (ADR1).

5. Method according to Claim 3, characterized in that for calculation of the said third address (ADR3) the bits of the second bit group of said pointer (ZG) are added to the binary sequences of said second address (ADR2).

6. Method according to Claims 1 and 2, characterized in that for calculation of said second address (ADR2) the binary sequences of said first address (ADR1) are incremented as a function of the bits of said first bit group of said pointer (ZG).

7. Method according to Claim 6, characterized in that for calculation of said third address (ADR3) the binary sequences of said second address (ADR2) are incremented as a function of the bits of the second bit group of said pointer (ZG).

8. Method according to Claim 6, characterized in that for calculation of said third address (ADR3) the binary sequences of said first address (ADR1) are incremented as a function of the bits of the second bit group of said pointer (ZG).

9. Method according to any one of Claims 1 to 8, characterized in that for calculation of said fourth address (ADR4) each binary sequence of said first address (ADR1) ) is incremented.

10. Method according to any one of Claims 1 to 8, characterized in that for calculation of said fourth address (ADR4) said first address (ADR1) is increased by addition by a constant offset independent of the color value.

## Revendications

1. Procédé pour la transformation de valeurs chromatiques, caractérisé par la combinaison des caractéristiques suivantes :

a) les coordonnées d'un espace de couleur d'origine tridimensionnel seront partagées, chaque fois, dans $2^m$ unités de quantification,
b) à partir de 2k + 1 valeurs de couleur d'origine, à chaque coordonnée de l'espace de couleur d'origine quantifié, les $2^{(m-k)}$ valeurs de couleur d'origine sont espacées, $2^{3k}$ triplets de couleur d'origine seront formés (m et k étant des nombres naturels et m étant plus grand que k),
c) pour chacun des $2^{3k}$ triplets de couleur d'origine, un triplet de couleur d'objectif correspondant d'un espace de couleur d'objectif tridimensionnel sera déterminé, dont les coordonnées seront mises en mémoire dans un premier tableau,

d) à chacun des $2^{3(m-k)}$ triplets de couleur d'origine, chaque fois placés entre les $2^{3k}$ triplet de couleur d'origine, un indicateur (ZG) et quatre coefficients d'importance (k1 à k4) seront associés, qui seront mis en mémoire dans un deuxième tableau,

e) à chacune des valeurs de couleur d'origine à transformer, un triplet de couleur d'origine de $2^{3m}$ triplets de couleur d'origine sera associé, qui consiste en trois suites binaires présentant, chaque fois, une partie d'ordre supérieur et une partie d'ordre inférieur,

f) à partir des parties d'ordre supérieur des suites binaires du triplet de couleur d'origine à transformer, une première adresse (ADR1) sera formée,

g) à partir de la première adresse (ADR1), chaque fois, par addition d'une constante spécifique d'espace partiel, une deuxième adresse (ADR2), une troisième adresse (ADR3) et une quatrième adresse (ADR4) seront calculées,

h) à partir des parties d'ordre inférieur des suites binaires du triplet de couleur d'origine à transformer, une cinquième adresse (ADR5) sera formée,

i) avec la première adresse (ADR1) provenant du premier tableau et avec la cinquième adresse (ADR5) provenant du deuxième tableau, les coordonnées de quatre triplets de couleur d'objectif (x1 à x4, y1 à y4, z1 à z4) et quatre coefficients d'importance (k1 à k4) seront déterminés,

k) à partir des coordonnées des quatre triplets de couleur d'objectif (x1 à x4, y1 à y4, z1 à z4) et des quatre coefficients d'importance (k1 à k4), par multiplication de matrice, le triplet de couleur d'objectif (x, y, z), correspondant au triplet de couleur d'origine à transformer, sera obtenu par calcul.

**2.** Procédé selon la revendication 1, caractérisé en ce,

qu'avec la première adresse (ADR1) provenant du premier tableau, les coordonnées d'un premier triplet de couleur d'objectif (x1, y1, z1) seront lues, et qu'avec la cinquième adresse (ADR5) provenant du deuxième tableau, l'indicateur (ZG) sera lu, qui présente deux groupes de bits.

**3.** Procédé selon les revendications 1 et 2, caractérisé en ce,

que pour le calcul de la deuxième adresse (ADR2), les bits du premier groupe de bits de l'indicateur (ZG) seront additionnés aux suites binaires de la première adresse (ADR1).

**4.** Procédé selon la revendication 3, caractérisé en ce,

que pour le calcul de la troisième adresse (ADR3), les bits du deuxième groupe de bits de l'indicateur (ZG) seront additionnés aux suites binaires de la première adresse (ADR1).

**5.** Procédé selon la revendication 3, caractérisé en ce,

que pour le calcul de la troisième adresse (ADR3), les bits du deuxième groupe de bits de l'indicateur (ZG) seront additionnés aux suites binaires de la deuxième adresse (ADR2).

**6.** Procédé selon les revendications 1 et 2, caractérisé en ce,

que pour le calcul de la deuxième adresse (ADR2), les suites binaires de la première adresse (ADR1) seront incrémentées en fonction des bits du premier groupe de bits de l'indicateur (ZG).

**7.** Procédé selon la revendication 6, caractérisé en ce,

que pour le calcul de la troisième adresse (ADR3), les suites binaires de la deuxième adresse (ADR2) seront incrémentées en fonction des bits du deuxième groupe de bits de l'indicateur (ZG).

**8.** Procédé selon la revendication 6, caractérisé en ce,

que pour le calcul de la troisième adresse (ADR3), les suites binaires de la première adresse (ADR1) seront incrémentées en fonction des bits du deuxième groupe de bits de l'indicateur (ZG).

**9.** Procédé selon une des revendications 1 à 8, caractérisé en ce,

que pour le calcul de la quatrième adresse (ADR4), chaque suite binaire de la première adresse (ADR1) sera incrémentée.

**10.** Procédé selon une des revendications 1 à 8, caractérisé en ce,

que pour le calcul de la quatrième adresse (ADR4), la première adresse (ADR1) sera augmentée par addition d'un décalage constant, indépendant de la valeur chromatique.

Fig. 1

*Fig. 2*

EP 0 601 241 B1

P7 =F(x,y+1,z+1)  P8 =F(x+1,y+1,z+1)

P3
=F(x,y,z+1)  P4 =F(x+1,y,z+1)

P5 =F(x,y+1,z)  P6 =F(x+1,y+1,z)

P1 =F(x,y,z)  P2 =F(x+1,y,z)

Fig. 3

Fig. 3f

Fig. 3e

Fig. 3a    Fig. 3b    Fig. 3c    Fig. 3d

EP 0 601 241 B1

EP 0 601 241 B1

m

| H | L |

k

Fig. 4

R

| H(R) | L(R) |

G

| H(G) | L(G) |

B

| H(B) | L(B) |

| H(R) | H(G) | H(B) |

| L(R) | L(G) | L(B) |

ADR 1

ADR 5

Fig. 5

| H(R) | H(G) | H(B) |
|---|---|---|

= ADR 1

+ | 1 | 1 | 1 |

= Offset

*Fig. 6*

= | H(R)+1 | H(G)+1 | H(B)+1 |

= ADR 2

= ADR 1

*Fig. 7*

= ADR 2

| ZG | k1 | k2 | k3 | k4 |
|----|----|----|----|----|

↑
=ADR 5

| L(R) | L(G) | L(B) |
|------|------|------|

*Fig. 8*

Fig. 9

= ZG

= ADR 1

= ADR 3

= ADR 4

H(B) → INC → H(B)+1 → H(B)+1 → H(B)+1 → H(B)+1 → H(B)+1

H(G) → H(G) → H(G) → H(G) → INC → H(G)+1 → H(G)+1

H(R) → H(R) → H(R) → H(R) → H(R) → H(R) → H(R)

Fig. 10

Fig. 11

H(R)    H(G)    H(B)    = ADR 1

| 0 | 0 | 1 | 0 | 1 | 1 | = ZG

H(R)    H(G)    H(B)

INC

INC

| H(R) | H(G)+1 | H(B)+1 |

| H(R) | H(G)+1 | H(B)+1 | = ADR 4

*Fig. 12*